# EUROPÄISCHE PATENTSCHRIFT

(11) **EP 4 083 775 B1**
(45) Veröffentlichungstag und Bekanntmachung des Hinweises auf die Patenterteilung: **20.08.2025**
(21) Anmeldenummer: 21171262.5
(22) Anmeldetag: 29.04.2021
(51) Int. Cl.: G06F 3/06, G06F 21/79

(54) **VORRICHTUNG UND VERFAHREN ZUR SPEICHERVERWALTUNG**
DEVICE AND METHOD FOR STORAGE MANAGEMENT
DISPOSITIF ET PROCÉDÉ DE GESTION DE LA MÉMOIRE

(43) Veröffentlichungstag der Anmeldung: 02.11.2022
(73) Patentinhaber: Offel, Michael, 10179 Berlin (DE)
(72) Erfinder: Offel, Michael, 10179 Berlin (DE)
(74) Vertreter: Manitz Finsterwald Patent- und Rechtsanwaltspartnerschaft mbB

(56) Entgegenhaltungen:
- US-A1- 2012 173 832
- US-A1- 2016 179 386
- US-A1- 2018 329 831

## Beschreibung

Die vorliegende Erfindung betrifft eine Vorrichtung und ein Verfahren zur Speicherverwaltung sowie einen Speicher.

Aus der US 2018/0329831 A1 ist eine Vorrichtung gemäß dem Oberbegriff des Anspruchs 1 bekannt. Die US 2012/0173832 A1 und die die US 2016/0179386 A1 betreffen ein "wear leveling" von Speicherbereichen.

Wie vorstehend ausgeführt, sind Vorrichtungen und Verfahren zur Speicherverwaltung prinzipiell aus dem Stand der Technik bekannt. Hierbei kommen oft Schlüssel-Wert-Speicher zum Einsatz. Schlüssel-Wert-Speicher (Key-Value-Stores) sind Speicher, in denen unter einem (Such-)Schlüssel ein Wert abgelegt wird, der mit Hilfe dieses Schlüssels in möglichst kurzer Zeit abgerufen werden soll. Bei Anwendungen, denen nur ein Speicher begrenzter Größe zur Verfügung steht, kann dabei die Situation auftreten, dass kein freier Speicher zum Einfügen neuer Einträge verfügbar ist. Insbesondere in Caching-Szenarien, aber auch in Netzwerkanwendungen, ist es in diesem Fall üblich, einen möglichst nicht relevanten Eintrag zu löschen. Oft ist dies der Eintrag, auf den am längsten nicht zugegriffen wurde. Dabei werden üblicherweise zwei getrennte Datenstrukturen verwendet, wobei eine Datenstruktur die zu speichernden bzw. die gespeicherten Elemente umfasst und die andere Datenstruktur eine Liste darstellt, in welcher sich aus der Position in der Liste dasjenige Element ergibt, auf das am längsten nicht zugegriffen wurde (Least Recently Used - LRU). Die Liste kann nach dem Zugriff auf Elemente durch Verschieben aktualisiert werden. Diese doppelte Datenstruktur stellt jedoch einen erhöhten Aufwand in Form von notwendigen Speicherzugriffen dar.

Es ist daher eine Aufgabe der vorliegenden Erfindung, eine verbesserte Vorrichtung und ein verbessertes Verfahren zur Speicherverwaltung bereitzustellen.

Diese Aufgabe wird zunächst gelöst durch eine Vorrichtung zum Verwalten eines Speichers gemäß Anspruch 1.

Erfindungsgemäß wird eine Vorrichtung zum Verwalten eines Speichers angegeben, wobei der Speicher eine Mehrzahl von Speicherplätzen aufweist, wobei der Speicher ausgebildet ist, in jedem der Mehrzahl von Speicherplätzen ein Element mit einem dazugehörigen Alterswert zu speichern. Die Vorrichtung ist ausgebildet,
- eine Schreibzugriffsanfrage zu empfangen, um ein neues Element in den Speicher zu schreiben,
- den Alterswert eines in dem Speicher vorhandenen Elements mit einem vorbestimmten Alter zu vergleichen und, wenn der Alterswert des in dem Speicher vorhandenen Elements größer oder gleich dem vorbestimmten Alter ist, das vorhandene Element mit dem neuen Element zu überschreiben.

Erfindungsgemäß ist also vorgesehen, den Elementen in dem Speicher jeweils ein Alter zuzuweisen. Das Alter bzw. der Alterswert können direkt oder indirekt gespeichert sein. Insbesondere kann der Alterswert indirekt in dem jeweiligen Speicherplatz gespeichert sein, z.B. in Form des unten noch genauer erläuterten Sequenzzahlwerts. Das Alter kann beispielsweise durch einen Lesezugriff oder beim Schreiben des Elements zurückgesetzt werden. Auf diese Weise können "alte" bzw. lange nicht verwendete Elemente erkannt werden. Elemente ab einem vorbestimmten Alter können als überschreibbar angesehen werden und dementsprechend ersetzt werden, wenn ein neueres Element in die Speicher geschrieben werden soll und keine Speicherplätze im Speicher mehr frei sind.

Durch das Vorsehen eines vorbestimmten Alters, ab welchem Elemente überschrieben werden können, können jeweils mehrere Elemente vorhanden sein, die als überschreibbar klassifiziert sind. Dies ist ein deutlicher Unterschied beispielsweise zur oben genannten Verwendung von LRU, bei welchen es immer genau ein Element gibt auf das am längsten nicht zugegriffen wurde. Auch z.B. bei FIFO-(First In First Out) oder LIFO- (Last In First Out) Speichern existiert immer nur ein Element, das überschreibbar ist. Zum Finden dieses einen Elements muss im schlechtesten Fall der gesamte Speicher durchsucht werden. Erfindungsgemäß kann das Finden eines überschreibbaren Elements vereinfacht und beschleunigt werden, da üblicherweise mehrere Elemente existieren, die überschreibbar sind. Somit kann nur in einem Teilbereich des Speichers gesucht werden, um ein überschreibbares Element zu finden. Dadurch werden erfindungsgemäß weniger Speicherzugriffe benötigt, als beispielsweise bei Verwendung herkömmlicher LRU-Verfahren. Zudem kann die Zeit, die für das Auffinden eines überschreibbaren Elements benötigt wird, reduziert werden.

Durch die erfindungsgemäße Vorrichtung ist es somit möglich, im Speicher vorhandene Elemente zu identifizieren, die mit neuen Elementen überschrieben werden können, und das, ohne eine zweite Datenstruktur zu benötigen. Im Vergleich zum Stand der Technik beläuft sich der Mehrbedarf an Speicher lediglich auf den Alterswert pro Element.

Die Erfindung kann insbesondere als "nicht kürzlich sequenziert" (not recently sequenced, NRS) bezeichnet werden. Es ist erfindungsgemäß möglich, besonders schlank und einfach diejenigen Elemente in einem Speicher zu identifizieren, die überschrieben werden können oder sollen.

Die oben genannte Vorgehensweise bei einer Schreibzugriffsanfrage kann insbesondere dann durchgeführt werden, wenn keine freien Speicherplätze in dem Speicher vorhanden sind und dementsprechend ein vorhandenes Element ersetzt/überschrieben werden soll.

Sofern noch freie oder leere Speicherplätze vorhanden sind, kann die Vorrichtung ausgebildet sein, bei einer Schreibzugriffsanfrage neue Elemente in freie Speicherplätze zu schreiben und dem neuen Element jeweils (zu einem Zeitpunkt) das Alter Null zuzuweisen. Die Vorrichtung kann dabei als überschreibbar klassifizierte Elemente wie freie oder leere Speicherplätze behandeln.

Der Speicher, der durch die Vorrichtung verwaltet wird, kann insbesondere ein sogenannter Cache-Speicher oder Pufferspeicher sein. Der Speicher kann von der Vorrichtung umfasst sein. Insbesondere kann der Speicher, der in der erfindungsgemäßen Vorrichtung eingesetzt wird, eine begrenzte Speichergröße aufweisen. Bevorzugt ist die maximale Größe des Speichers 256 Kilobyte, 1 Megabyte oder 5 Megabyte. Darüber hinaus kann der Speicher ein Speicher mit einer im Verhältnis zum Gesamtsystem schnellen Zugriffszeit sein. Grundsätzlich kann die Art des Speichers aber beliebiger Natur sein, insbesondere kann ein DRAM-Speicher, ein Permanentspeicher wie eine Festplatte oder eine SSD aber auch Flash-Speicher verwendet werden.

Die Vorrichtung eignet sich insbesondere zum Einsatz in Netzwerkgeräten, wie beispielsweise Firewalls, Switches, NATs, VPN-Gateways, TCP-Stacks, sowie generell Security- und/oder Serveranwendungen. Insbesondere ist der Speicher ein Zustandsspeicher, beispielsweise für Netzwerkverbindungen. Die Vorrichtung eignet sich auch zum Einsatz für CPU-Cache-Speicher, wie beispielsweise einen L1-, L2- oder L3-Cache. Die Vorrichtung kann bevorzugt Teil eines der vorgenannten Geräte sein, beispielsweise Teil einer Firewall.

Erfindungsgemäß weist der Speicher und/oder die Vorrichtung einen Sequenzzähler auf. Erfindungsgemäß ist der Speicher ausgebildet, in jedem der Mehrzahl von Speicherplätzen ein Element mit einem dazugehörigen Sequenzzahlwert zu speichern.

Der Speicher weist also einen Sequenzzähler auf. Der Sequenzzähler ist ein Zähler oder Counter, der auch als globaler Sequenzzähler bezeichnet werden kann. Der Sequenzzähler ist und/oder umfasst dabei einen Integer-Wert, das heißt eine ganze Zahl. Der Sequenzzähler kann bei der Schreibzugriffsanfrage beispielsweise erhöht und/oder inkrementiert werden, weiter beispielsweise um 1.

Die Vorrichtung kann ausgebildet sein, die Schreibzugriffsanfrage zu empfangen, um ein neues Element in den Speicher zu schreiben, den Sequenzzähler mit einem Sequenzzahlwert eines in dem Speicher vorhandenen Elements zu vergleichen und, wenn der Sequenzzahlwert des in dem Speicher vorhandenen Elements um eine festgelegte Differenz kleiner ist als der Sequenzzähler, das vorhandene Element mit dem neuen Element zu überschreiben.

Die festgelegte Differenz kann somit dem vorbestimmten Alter entsprechen, wohingegen die Differenz von Sequenzzähler und Sequenzzahlwert bevorzugt dem Alterswert eines in dem Speicher vorhandenen Elements entspricht. Alternativ kann das Alter (d.h. der Alterswert) selbst auch direkt in jedem Element gespeichert werden, wobei dann auf die Differenz von Sequenzzähler und Sequenzzahlwert verzichtet werden kann. Es versteht sich, dass der Alterswert und/oder das vorbestimmte Alter auch auf andere Art und Weise in der Vorrichtung und/oder dem Speicher hinterlegt werden können, solange ersichtlich ist, welches Alter die jeweiligen Elemente besitzen.

Insbesondere ist es somit möglich, ein oder mehrere in dem Speicher vorhandenen Elemente allein aufgrund des (globalen) Sequenzzählers und des jeweiligen Sequenzzahlwerts als abgelaufen, das heißt als überschreibbar zu klassifizieren.

Die Elemente bleiben dabei dennoch im Speicher vorhanden und sind weiterhin suchbar, bis diese tatsächlich überschrieben werden.

Der Speicher weist weiter erfindungsgemäß eine Mehrzahl von Speicherplätzen auf, wobei in jedem von der Mehrzahl von Speicherplätzen ein Element mit einem dazugehörigen Sequenzzahlwert gespeichert werden kann. Jedes der Elemente in dem Speicher umfasst dabei beispielsweise ein Paar von einem Schlüssel und einem Wert, ein sogenanntes Schlüssel-Wert-Paar. Alternativ kann ein Element auch nur einen Schlüssel (ohne einen zugeordneten Wert) umfassen. Die Speicherung nur eines Schlüssels in einem Element kann beispielsweise bei der Implementierung eines Anti-Replay Schutzes für Netzwerken durch die Vorrichtung vorgesehen sein, wobei die Vorrichtung dann sicherstellt, dass Pakete die bereits gesehen oder empfangen wurden nicht ein weiteres Mal akzeptiert werden.

Jedem Element ist bevorzugt ein Sequenzzahlwert zugewiesen, wobei der Sequenzzahlwert ebenso beispielsweise ein Integer-Wert ist.

Üblicherweise kann der Speicher mehrere Speicherplätze umfassen, beispielsweise für n = 256 Elemente, und umfasst zu einem gegebenen Zeitpunkt im laufenden Betrieb auch m = n = 256 Elemente mit dazugehörigen Sequenzzahlwerten, die die Speicherplätze belegen.

Der jeweilige Sequenzzahlwert wird dabei zusammen mit dem Element abgespeichert. Beispielsweise wird der Sequenzzahlwert dem Element voran- oder hintenangestellt.

Die Vorrichtung ist insbesondere ausgebildet, eine Schreibzugriffsanfrage zu empfangen, um ein neues Element in den Speicher zu schreiben. Die Schreibzugriffsanfrage erfolgt dabei beispielsweise von einem Prozessor und/oder einer Datenquelle, wie einer Festplatte oder einem Netzwerkmodul. Dabei begehrt die Schreibzugriffsanfrage, die auch als Schreibanfrage bezeichnet werden kann, ein Element, das heißt ein Schlüssel-Wert-Paar, in den Speicher zu schreiben.

Eine Schreibzugriffsanfrage kann dabei sowohl ein neu in den Speicher zu schreibendes Element, als auch eine Aktualisierung und/oder Veränderung eines in dem Speicher vorhandenen Elements, betreffen.

Die Vorrichtung ist bevorzugt ausgebildet, den Sequenzzähler mit einem Sequenzzahlwert eines in dem Speicher vorhandenen Elements zu vergleichen. Das Vergleichen des Sequenzzählers mit einem Sequenzzahlwert eines Elements erfolgt dabei erfindungsgemäß durch Differenzbildung des Sequenzzählers mit dem Sequenzzahlwert.

Die Vorrichtung kann darüber hinaus ausgebildet sein, das in dem Speicher vorhandene Element mit dem neuen Element zu überschreiben, wenn der Sequenzzahlwert des in dem Speicher vorhandenen Elements um eine festgelegte Differenz kleiner ist als der Sequenzzähler. Mit anderen Worten wird das in dem Speicher vorhandene Element dann mit dem neuen Element überschrieben, wenn die Differenz zwischen dem Wert des Sequenzzählers, insbesondere zum Zeitpunkt der Schreibzugriffsanfrage, größer als ein vorbestimmter Wert ist.

Beispielsweise weist der Sequenzzähler einen Wert von 64 auf und der Sequenzzahlwert des in dem Speicher vorhandenen Elements einen Wert von 12 auf. Wenn nun die festgelegte Differenz (d.h. das vorbestimmte Alter) 24 beträgt, dann wird jeder Sequenzzahlwert, der kleiner ist als 64 - 24 = 40, also auch der vorliegende Sequenzzahlwert von 12, als überschreibbar klassifiziert. Mit anderen Worten wird jeder Sequenzzahlwert, der eine Differenz von größer 24 aufweist, als überschreibbar klassifiziert.

Wenn hingegen der Sequenzzahlwert des in dem Speicher vorhandenen Elements nicht um eine festgelegte Differenz kleiner ist als der Sequenzzähler, also eine Differenz zwischen dem Wert des Sequenzzählers und dem Sequenzzahlwert nicht größer ist als ein vorbestimmter Wert, dann wird das in dem Speicher vorhandene Element nicht mit dem neuen Element überschrieben.

In diesem Fall kann die Vorrichtung weiter ausgebildet sein, den Sequenzzähler mit einem Sequenzzahlwert eines weiteren in dem Speicher vorhandenen Elements zu vergleichen und, wenn der Sequenzzahlwert des Weiteren in dem Speicher vorhandenen Elements um eine festgelegte Differenz kleiner ist als der Sequenzzähler, das weitere in dem Speicher vorhandene Element mit dem neuen Element zu überschreiben.

Wie oben bereits angedeutet, ist es durch die Vorrichtung möglich, dass eine Mindestanzahl an zu überschreibenden Elementen definiert werden kann. Dies kann erfolgen, indem die festgelegte Differenz zwischen dem Sequenzzähler und dem Sequenzzahlwert definiert wird, wobei alle Elemente mit einem Sequenzzahlwert, welcher zumindest die festgelegte Differenz aufweist, als überschreibbar klassifiziert werden. Das vorbestimmte Alter bzw. die festgelegte Differenz können derart gewählt sein, dass mehr als ein Element, insbesondere mindestens 10% oder 25% oder 50% der Elemente in dem Speicher als überschreibbar gelten. Somit ergibt sich bei einem gewünschten Überschreiben eines im Speicher vorhandenen Elements eine Mindestwahrscheinlichkeit, ein überschreibbares Element zu finden.

Weiter ist es durch die Vorrichtung, insbesondere aufgrund der festgelegten Differenz, möglich, Garantien auszugeben, wie lange ein bestimmtes Element in dem Speicher verbleibt, bis es überschrieben wird. Die Vorrichtung kann weiterhin ausgelegt sein, zu garantieren, dass ein Element, welches überschrieben wird, zu den ältesten Elementen gehört, also zu denjenigen Elementen, auf die am längsten nicht zugegriffen wurde (d.h. ein Lese- und/oder Schreibzugriff auf das Element stattgefunden hat). Durch das vorbestimmte Alter kann automatisch garantiert werden, dass die als überschreibbar klassifizierten Elemente die ältesten Elemente sind, sodass nicht ungewollt jüngere Elemente gelöscht werden.

Die erfindungsgemäße Vorrichtung kann dadurch weitergebildet werden, dass die in den Speicherplätzen gespeicherten Elemente und Sequenzzahlwerte in derselben Datenstruktur gespeichert sind. Die gespeicherten Elemente und Sequenzzahlwerte sind also bevorzugt nicht in zwei verschiedenen Datenstrukturen gespeichert, sondern in einer einzigen Datenstruktur. Unter dem Abspeichern in einer und/oder derselben Datenstruktur ist insbesondere das Abspeichern in demselben Array oder Speicherbereich zu verstehen. Bevorzugt ist darunter auch zu verstehen, dass sämtliche Daten eines Elements mit demselben Speicherzugriff oder denselben Speicherzugriffen abgerufen oder geschrieben werden können. Durch die Verwendung derselben Datenstruktur für die gespeicherten Elemente und die Sequenzzahlwerte werden die für die Schreib- und/oder Lesezugriffe auf den Speicher notwendigen Operationen reduziert und vereinfacht.

Insbesondere bei einer Abrufbarkeit durch dieselben Speicherzugriffe aber auch generell kann die eine Datenstruktur über mehrere getrennte physikalische Speichereinheiten (z.B. verschiedene Speicherchips eines DRAM-Speicherriegels oder einer SSD) verteilt gespeichert sein. Hierdurch ergibt sich die Möglichkeit des parallelen Zugriffs auf die Speichereinheiten, wodurch die Bandbreite und damit die Geschwindigkeit der Speicherzugriffe gesteigert werden kann.

Die erfindungsgemäße Vorrichtung ist ausgebildet, den Sequenzzähler in Erwiderung auf die Schreibzugriffsanfrage zu erhöhen. Die Vorrichtung erhöht dann bei der Schreibzugriffsanfrage den Sequenzzähler, beispielsweise um 1, während die einzelnen Sequenzzahlwerte der in dem Speicher vorhandenen Elemente nicht erhöht werden. Insbesondere erhöht die Vorrichtung den Sequenzzähler bei jeder Schreibzugriffsanfrage. Dadurch erhöht sich der Alterswert aller bereits im Speicher vorhandenen Elemente, insbesondere um 1.

Beim Schreiben eines neuen Elements in den Speicher kann für das neue Element der gerade gültige Wert des Sequenzzählers als Sequenzzahlwert geschrieben werden. Das neue Element beginnt also mit Alter Null.

Die erfindungsgemäße Vorrichtung ist ausgebildet den Sequenzzähler in Erwiderung auf eine Lesezugriffsanfrage zu erhöhen. Eine Lesezugriffsanfrage erfolgt dabei beispielsweise, ebenso wie die Schreibzugriffsanfrage, von einem Prozessor und/oder einer Datenquelle, wie einer Festplatte oder einem Netzwerkmodul. Dabei begehrt die Lesezugriffsanfrage, die auch als Leseanfrage bezeichnet werden kann, ein Element, das heißt zumindest einen Schlüssel oder ein Schlüssel-Wert-Paar, aus dem Speicher auszulesen. Bevorzugt wird für das von der Lesezugriffsanfrage betroffene Element der Sequenzzahlwert auf den Wert des Sequenzzählers gesetzt, wodurch der Alterswert des von der Lesezugriffsanfrage betroffenen Elements auf Null gesetzt wird. Die Vorrichtung erhöht bevorzugt bei der Lesezugriffsanfrage den Sequenzzähler, beispielsweise um 1, während die einzelnen Sequenzzahlwerte der in dem Speicher vorhandenen Elemente nicht erhöht werden. Insbesondere erhöht die Vorrichtung den Sequenzzähler bei jeder Lesezugriffsanfrage. Auch eigentlich schon als überschreibbar klassifizierte Elemente können durch die Neusetzung des Sequenzzahlwerts bei einer Lesezugriffsanfrage wieder als nicht überschreibbar klassifiziert werden. Elemente können also "wiederbelebt" werden.

Für das Abrufen eines Elements im Zuge einer Lesezugriffsanfrage kann insbesondere nur eine einzige Leseoperation auf den Speicher benötigt werden. Für das Setzen des Sequenzzahlwerts für das Element kann bevorzugt nur eine Schreiboperation auf den Speicher durchgeführt werden.

Die erfindungsgemäße Vorrichtung kann dadurch weitergebildet werden, dass der Speicher einen Schlüssel-Wert-Speicher (Key-Value-Store) umfasst, in dem unter einem Schlüssel ein Wert abgelegt wird. Das vorgenannte Element kann den Schlüssel und den Wert umfassen. Das Element kann zudem noch einen Index umfassen, welcher durch Hashen des Schlüssels erzeugt wird. Der Index kann sich zudem implizit aus der Position des Elements im Speicher ergeben. Der Index kann insbesondere nicht explizit im Speicher gespeichert sein. Beim Hashen des Schlüssels wird der Schlüssel einer vorbestimmten Hash-Funktion zugeführt, wodurch dann ein Hashwert (d.h. im vorliegenden Fall der Index) erzeugt wird.

Bei einer Lesezugriffsanfrage kann die Vorrichtung einen Schlüssel erhalten, zu dem der entsprechende Wert aus dem Speicher ausgelesen wird. Zu diesem Zweck kann die Vorrichtung ausgebildet sein, den erhaltenen Schlüssel einer Hash-Funktion zuzuführen. Der von der Hash-Funktion erzeugte Wert, d.h. der erzeugte Index, wird dann verwendet, um das entsprechende Element zu identifizieren und den dort gespeicherten Wert auszugeben, sofern der in dem Element gespeicherte Schlüssel dem erhaltenen Schlüssel entspricht. Zudem kann auch der Sequenzzahlwert des entsprechenden Elements auf den momentanen Wert des Sequenzzählers gesetzt werden.

Die erfindungsgemäße Vorrichtung kann dadurch weitergebildet werden, dass die festgelegte Differenz und/oder das vorbestimmte Alter ein Bruchteil der Anzahl der Speicherplätze des Speichers ist. Beispielsweise ist für einen Speicher mit n = 256 Speicherplätzen die festgelegte Differenz n/2 = 128 oder n/4 = 64. Für den Fall, dass die festgelegte Differenz beispielsweise 64 beträgt, bedeutet das, dass ein in dem Speicher vorhandenes Element dann erfindungsgemäß mit einem neuen Element überschrieben wird, wenn der Sequenzzahlwert des in dem Speicher vorhandenen Elements um 64 kleiner ist als der Sequenzzähler. Dies wiederum bedeutet, dass garantiert werden kann, dass zumindest diejenigen 64 Elemente beibehalten und/oder nicht überschrieben werden, die von den 64 letzten Schreibzugriffsanfragen und/oder Lesezugriffsanfragen betroffen waren.

Die erfindungsgemäße Vorrichtung kann dadurch weitergebildet werden, dass zumindest 10%, bevorzugt zumindest 30% oder 50% oder 75%, der Elemente einen Alterswert aufweisen, welcher größer oder gleich dem vorbestimmten Alter ist. Insbesondere ist die festgelegte Differenz derart gewählt, dass zumindest 10%, bevorzugt zumindest 30% oder 50% oder 75%, der Elemente einen Alterswert aufweisen, welcher größer oder gleich dem vorbestimmten Alter ist. Dementsprechend können zumindest 10%, bevorzugt zumindest 30% oder 50% oder 75% der Elemente als überschreibbar klassifiziert sein.

Zudem können bevorzugt maximal 50% oder 75% oder 80% der Elemente einen Alterswert aufweisen, welcher größer oder gleich dem vorbestimmten Alter ist.

Wie oben bereits kurz erläutert, kann die erfindungsgemäße Vorrichtung dadurch weitergebildet werden, dass die Vorrichtung ausgebildet ist, den Sequenzzahlwert des neuen Elements auf den Wert des Sequenzzählers zu setzen. Bei dem Vorgang des Überschreibens des vorhandenen Elements mit dem neuen Element weist das neue Element üblicherweise noch keinen Sequenzzahlwert auf. Wenn nun das in dem Speicher vorhandene Element überschrieben wird, wird dem neuen Element der Wert des Sequenzzählers, den dieser zum Zeitpunkt des Überschreibens aufweist, zugewiesen. So bekommt das jeweilige in den Speicher geschriebene Element einen fiktiven Startwert zugeteilt. Wenn nun der Sequenzzähler bei jedem Schreibzugriff und/oder bei jedem Lesezugriff erhöht wird, die jeweiligen Sequenzzahlwerte der in dem Speicher vorhandenen Elemente nicht, altern diese in dem Speicher vorhandenen Elemente weiter und es ist somit möglich, das Alter eines jeden Elements durch einfache Differenzbildung zu bestimmen.

Die erfindungsgemäße Vorrichtung kann dadurch weitergebildet werden, dass das in dem Speicher vorhandene Element, dessen Sequenzzahlwert mit dem Sequenzzähler verglichen wird, zufällig aus den in dem Speicher vorhandenen Elementen ausgewählt wird. Alternativ oder zusätzlich können auch mehrere Elemente zum Vergleichen des Sequenzzählers zufällig ausgewählt werden. Das zufällige Auswählen des in dem Speicher vorhandenen Elements kann beispielsweise durch einen Zufallszahlengenerator basierend auf den in dem Speicher vorhandenen Speicherplätzen erfolgen. Insbesondere können zufällig ein Index oder mehrere Indexe erzeugt werden. Dadurch, dass eine gewisse Anzahl an Elementen überschreibbar ist, ergibt sich eine gewisse Wahrscheinlichkeit, ein solch überschreibbares Element zufällig auszuwählen. Die Verwendung zufälliger Elemente kann insbesondere bei Schreibzugriffsanfragen erfolgen.

Alternativ oder zusätzlich kann die erfindungsgemäße Vorrichtung dadurch weitergebildet werden, dass das in dem Speicher vorhandene Element, dessen Sequenzzahlwert mit dem Sequenzzähler verglichen wird, mittels *linear probing* (lineare Antastung) aus den in dem Speicher vorhandenen Elementen ausgewählt wird. Für das linear probing kann die Vorrichtung ausgebildet sein, aus dem zu suchenden Schlüssel mittels einer Hash-Funktion einen Index zu erzeugen. Anschließend wird überprüft, ob das Element mit dem Index den zu suchenden Schlüssel enthält. Ist dies nicht der Fall, beispielsweise bei einer Hash-Kollision, bei welcher verschiedene Schlüssel zum selben Index führen, wird das Element mit dem nächstfolgenden Index überprüft. Die Vorrichtung kann ausgebildet sein, solange das Element mit dem nächstfolgenden Index zu überprüfen, bis das passende Element (d.h. das Element mit dem zu suchenden Schlüssel) gefunden wurde.

Weiter alternativ oder zusätzlich kann die erfindungsgemäße Vorrichtung dadurch weitergebildet werden, dass das in dem Speicher vorhandene Element, dessen Sequenzzahlwert mit dem Sequenzzähler verglichen wird, mittels *cuckoo hashing* aus den in dem Speicher vorhandenen Elementen ausgewählt wird. Für cuckoo hashing kann die Vorrichtung ausgebildet sein, die Speicherplätze in zwei separate Speicherbereiche aufzuteilen, wobei für jeden Speicherbereich eine unterschiedliche Hash-Funktion verwendet wird, um aus einem Schlüssel einen Index zu erzeugen. Cuckoo hashing besitzt üblicherweise den Nachteil, dass bei hoher Belegung der Speicherplätze (z.B. bei mehr als 50%) nicht immer ein freier Speicherplatz für eine Schreibzugriffsanfrage gefunden werden kann. Auch das Löschen des Elements, auf das am längsten nicht zugegriffen wurde, muss nicht notwendigerweise helfen, da dieses Element in einem Speicherbereich gelöscht werden kann, der momentan nicht betrachtet wird. Durch den Einsatz eines Alterswerts, ab welchem ein Element als überschreibbar gilt bzw. klassifiziert wird, kann wiederum die Wahrscheinlichkeit stark erhöht werden, ein solches Element zu finden. Zusätzliche Speicherzugriffe können dementsprechend entfallen.

Die Verwendung von linear probing und/oder cuckoo hashing kann insbesondere bei Lesezugriffsanfragen erfolgen.

Die erfindungsgemäße Vorrichtung kann dadurch weitergebildet werden, dass die Vorrichtung weiter ausgebildet ist, eine Vielzahl von Schreib- und/oder Lesezugriffsanfragen auf den Speicher parallel durchzuführen. Parallel bedeutet hierbei, dass die Schreib- und/oder Lesezugriffsanfragen zeitlich gleichzeitig auf den Speicher zugreifen. Insbesondere können zumindest 32, 256 oder gar zumindest 512 oder 1024 parallele Schreib- und/oder Lesezugriffsanfragen durchgeführt werden. Bei der oben genannten Verwendung von LRU, bei welchen es immer genau ein Element gibt auf das am längsten nicht zugegriffen wurde und welches dementsprechend von einer Schreibzugriffsanfrage überschrieben werden könnte, kann es zu Konflikten kommen, weil parallele Schreibzugriffsanfragen auf dasselbe Element gerichtet sein können. Im Gegensatz dazu wird es durch die hierin beschriebene Vorrichtung ermöglicht, viele parallele Zugriffe durchzuführen, weil viele Elemente gleichzeitig als überschreibbar klassifiziert sein können. Ein Konflikt ist dadurch sehr unwahrscheinlich. Um dennoch einen gleichzeitigen Zugriff von mehreren Schreib- und/oder Lesezugriffsanfragen auf dasselbe Element zu unterbinden, kann die Vorrichtung ausgebildet sein, beim Lesen oder Schreiben eines Elements den Zugriff für weitere Anfragen auf dieses Element zu unterbinden, insbesondere mittels Mutexen (Mutex für *mutual* exclusion).

Die Vorrichtung kann ausgebildet sein, die parallelen Schreib- und/oder Lesezugriffsanfragen mittels verschiedener Threads durchzuführen, wobei ein Thread bevorzugt jeweils nur eine Anfrage durchführt.

Die erfindungsgemäße Vorrichtung kann dadurch weitergebildet werden, dass die Vorrichtung weiter ausgebildet ist, die in dem Speicher vorhandenen Elemente in nach ihrem Sequenzzahlwert zu sortieren.

Insbesondere kann die Vorrichtung ausgebildet sein, die in dem Speicher vorhandenen Elemente absteigend oder aufsteigend nach dem Alterswert bzw. dem Sequenzzahlwert zu sortieren. So lassen sich diejenigen Elemente, die durch neue Elemente überschrieben werden können oder sollen, besonders leicht finden.

Bevorzugt kann eine Sortierung der Elemente in dem Speicher mit linear probing kombiniert werden. Bei einer solchen Kombination kann sichergestellt werden, dass nach dem Auffinden eines Elements, welches als überschreibbar klassifiziert ist (und dementsprechend zumindest das vorbestimmte Alter aufweist), später kein jüngeres Element mehr gefunden wird.

Die eingangs genannte Aufgabe wird auch gelöst durch ein Verfahren zum Verwalten eines Speichers. Gemäß dem Verfahren weist der Speicher eine Mehrzahl von Speicherplätzen auf, wobei der Speicher ausgebildet ist, in jedem der Mehrzahl von Speicherplätzen ein Element mit einem dazugehörigen Alterswert zu speichern, wobei
- eine Schreibzugriffsanfrage empfangen wird, um ein neues Element in den Speicher zu schreiben,
- der Alterswert eines in dem Speicher vorhandenen Elements mit einem vorbestimmten Alter verglichen wird und,
wenn der Alterswert des in dem Speicher vorhandenen Elements größer oder gleich dem vorbestimmten Alter ist, das vorhandene Element mit dem neuen Element überschrieben wird.

Die eingangs genannte Aufgabe wird auch gelöst durch ein Computerprogrammprodukt, umfassend ein nicht flüchtiges computerlesbares Medium, auf dem Programmcodeteile gespeichert sind, wobei die Programmcodeteile konfiguriert sind, bei Ausführung auf einem Computer das hierin beschriebene Verfahren auszuführen.

Die eingangs genannte Aufgabe wird auch gelöst durch einen Speicher, umfassend einen Sequenzzähler und eine Mehrzahl von Speicherplätzen, wobei der Speicher ausgebildet ist, in jedem der Mehrzahl von Speicherplätzen ein Element mit einem dazugehörigen Sequenzzahlwert zu speichern, und wobei der Speicher weiter eine Vorrichtung nach einem der oben beschriebenen Ausführungsbeispiele umfasst.

Bezüglich der Vorteile und Ausgestaltungen des Verfahrens und des Speichers wird auf die oben beschriebenen Vorteile und Ausgestaltungen der Vorrichtung verwiesen, die gleichermaßen auch auf das Verfahren und den Speicher anwendbar sind.

Dabei sind die oben beschriebenen Ausführungsformen der Vorrichtung insbesondere geeignet eine der oben beschriebenen Ausführungsformen des Verfahrens auszuführen. Die oben beschriebenen Ausführungsformen der Vorrichtung können insbesondere teilweise oder vollständig softwarebasiert realisiert sein.

Weiterer Gegenstand der Erfindung ist ein Netzwerkgerät, insbesondere eine Firewall, welches zumindest einen Anschluss für ein Datennetzwerk aufweist und eine Vorrichtung der voranstehend beschriebenen Art umfasst. Das Netzwerkgerät kann als Speicher einen Zustandsspeicher aufweisen, in welchem die ein- und ausgehenden Verbindungen des Datennetzwerks gespeichert sind. Der Anschluss für das Datennetzwerk kann physisch vorhanden sein (z.B. als Ethernet-Buchse) oder rein virtuell ausgebildet sein (z.B. bei einer virtuellen Firewall). Kommen nun neue Verbindungen hinzu, erfolgt für die neue Verbindung eine Schreibzugriffsanfrage an die Vorrichtung, welche dann in der oben beschriebenen Art und Weise ein überschreibbares Element mit den Informationen über die neue Verbindung überschreibt.

Weiterer Gegenstand der Erfindung ist ein Prozessor, beispielsweise ein x86- oder x64-Prozessor oder ein FPGA (Field Programmable Gate Array), mit einem Cache-Speicher und einer Vorrichtung der voranstehend beschriebenen Art. Die Vorrichtung kann in dem Prozessor die Schreibzugriffsanfragen für den Cache-Speicher auf die hierin beschriebene Art und Weise durchführen.

Die Erfindung wird nun beispielhaft unter Bezugnahme auf die Figuren erläutert. Es zeigen:
- Figur 1:: Eine erfindungsgemäße Vorrichtung und einen Speicher; und
- Figur 2:: Ein Ablaufdiagramm eines erfindungsgemäßen Verfahrens.

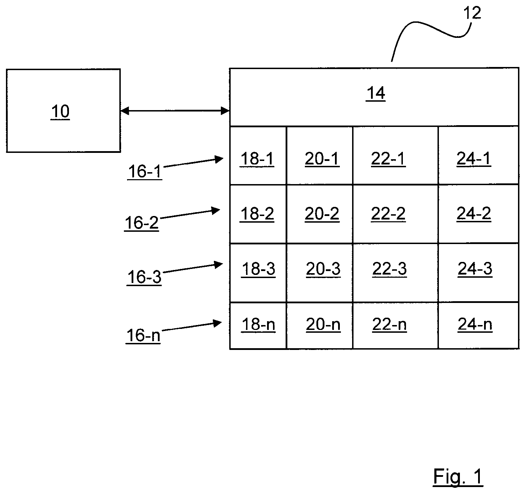

Fig. 1 zeigt eine Vorrichtung 10, welche mit einem Speicher 12, beispielsweise einem DRAM-Speicher einer Firewall, gekoppelt ist. Die Vorrichtung 10 führt Lese- und Schreibzugriffsanfragen an den Speicher 12 aus.

In dem Speicher 12 (oder alternativ auch in der Vorrichtung 10 selbst), ist ein Speicher für einen Sequenzzähler 14 vorgesehen. Der Speicher 12 weist mehrere Speicherplätze auf, die jeweils von Elementen 16-1 bis 16-n belegt sind.

Jedes Element 16 ist an einer bestimmten Position im Speicher 12 gespeichert. Die Position wird durch einen Index 18-1 bis 18-n symbolisiert. Es versteht sich, dass der Index 18 selbst nicht im Speicher 12 explizit abgespeichert ist, stattdessen ergibt sich der Index 18 implizit aus der Position eines Elements 16 im Speicher 12. Jedes Element 16 umfasst einen Schlüssel 20-1 bis 20-n und optional einen Wert 22-1 bis 22-n. Das Alter jedes Elements 16 ist über einen im Speicher 12 zu dem Element 16 abgespeicherten Sequenzzahlwert 24-1 bis 24-n bestimmbar, insbesondere durch Subtraktion des Sequenzzahlwerts 24 von dem Wert des Sequenzzählers 14.

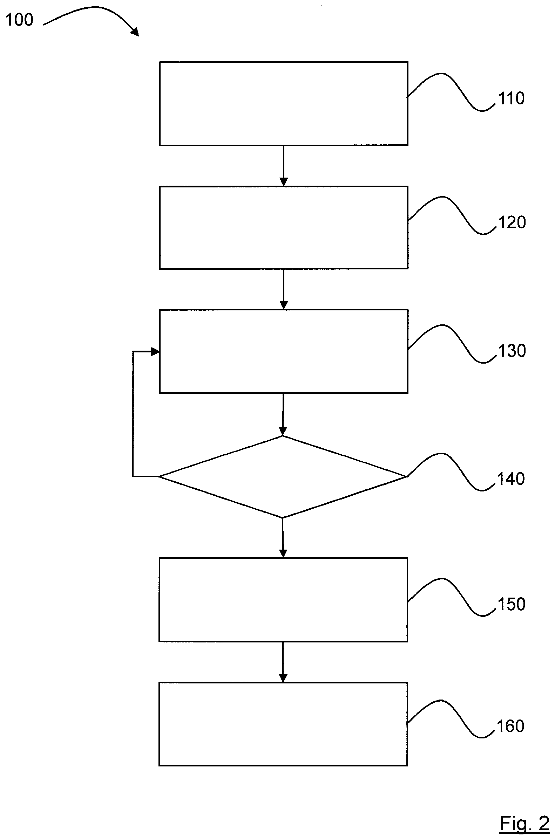

Fig. 2 zeigt ein Ablaufdiagramm eines Verfahrens 100 zur Speicherverwaltung des Speichers 12. Das Verfahren 100 weist dabei zunächst einen Schritt 110 auf. In diesem Schritt 110 wird eine Schreibzugriffsanfrage empfangen, um ein neues Element 16 in den Speicher 12 zu schreiben.

Das Verfahren weist weiter einen Schritt 120 auf. In diesem Schritt 120 wird der Sequenzzähler 14 erhöht.

Das Verfahren 100 weist weiter einen Schritt 130 auf. In diesem Schritt 130 wird der Sequenzzähler 14 mit einem Sequenzzahlwert 24 eines in dem Speicher 12 vorhandenen Elements 16 verglichen, wobei das in dem Speicher 12 vorhandene Element zufällig ausgewählt wird.

Das Verfahren 100 weist weiter eine Entscheidung 140 auf. In dieser Entscheidung 140 wird entschieden, ob der Sequenzzahlwert 24 des in dem Speicher 12 vorhandenen Elements 16 um eine festgelegte Differenz kleiner ist als der Sequenzzähler 14.

Wenn die Entscheidung 140 positiv beschieden wird, fährt das Verfahren mit einem Schritt 150 fort. In diesen Schritt 150 wird das vorhandene Element 16 mit dem neuen Element überschrieben.

Wenn die Entscheidung 140 hingegen negativ beschieden wird, wird das vorhandene Element 16 nicht überschrieben und das Verfahren kehrt zurück zum Schritt 130, wobei ein anderes in dem Speicher 12 vorhandenes Element 16 ausgewählt wird.

Nach dem Schritt 150 erfolgt dann ein Schritt 160. In diesem Schritt 160 wird der Sequenzzahlwert 24 des neuen Elements 16 auf den Wert des Sequenzzählers 14 gesetzt.

In einem nicht gezeigten Schritt kann ein Sortieren der in dem Speicher vorhandenen Elemente nach ihrem Sequenzzahlwert erfolgen. Dieser Schritt kann insbesondere nach dem Schritt 110 des Empfangens einer Schreibzugriffsanfrage und vor oder nach dem Schritt 120 des Erhöhens des Sequenzzählers 14 erfolgen.

### Bezugszeichenliste

- 10: Vorrichtung
- 12: Speicher
- 14: Sequenzzähler
- 16: Element
- 18: Index
- 20: Schlüssel
- 22: Wert
- 24: Sequenzzahlwert
- 100: Verfahren
- 110: Verfahrensschritt
- 120: Verfahrensschritt
- 130: Verfahrensschritt
- 140: Entscheidung
- 150: Verfahrensschritt
- 160: Verfahrensschritt

## Patentansprüche

1. Vorrichtung (10) zum Verwalten eines Speichers (12), wobei der Speicher (12) eine Mehrzahl von Speicherplätzen aufweist, wobei der Speicher (12) ausgebildet ist, in jedem der Mehrzahl von Speicherplätzen ein Element (16-1 - 16-n) mit einem dazugehörigen Alterswert zu speichern, wobei die Vorrichtung (10) ausgebildet ist,
- eine Schreibzugriffsanfrage zu empfangen, um ein neues Element (16-1 - 16-n) in den Speicher (12) zu schreiben,
- den Alterswert eines in dem Speicher (12) vorhandenen Elements (16-1 - 16-n) mit einem vorbestimmten Alter zu vergleichen und,
- wenn der Alterswert des in dem Speicher (12) vorhandenen Elements (16-1 - 16-n) größer oder gleich dem vorbestimmten Alter ist, das vorhandene Element (16-1 - 16-n) mit dem neuen Element (16-1 - 16-n) zu überschreiben,
**dadurch gekennzeichnet, dass**
die Vorrichtung (10) einen Sequenzzähler (14) aufweist, wobei der Speicher (12) ausgebildet ist, in jedem der Mehrzahl von Speicherplätzen ein Element (16-1 - 16-n) mit einem dazugehörigen Sequenzzahlwert (24-1 - 24-n) zu speichern, wobei die Vorrichtung (10) ausgebildet ist, den Alterswert eines Elements (16-1 - 16-n) durch Subtraktion des Sequenzzahlwerts (24-1 - 24-n) von dem Wert des Sequenzzählers (14) zu ermitteln,
wobei die Vorrichtung (10) weiter ausgebildet ist, den Sequenzzähler (14) in Erwiderung auf die Schreibzugriffsanfrage und eine Lesezugriffsanfrage zu erhöhen.

2. Vorrichtung (10) nach dem vorhergehenden Anspruch 1,
dadurch**gekennzeichnet**, dass
die in den Speicherplätzen gespeicherten Elemente (16-1 - 16-n) und/oder Sequenzzahlwerte (24-1 - 24-n) in derselben Datenstruktur gespeichert sind.

3. Vorrichtung (10) nach Anspruch 2,
dadurch**gekennzeichnet**, dass
die Vorrichtung (10) ausgebildet ist, für das von der Schreibzugriffsanfrage und/oder von der Lesezugriffsanfrage betroffene Element (16-1 - 16-n) den Sequenzzahlwert (24-1 - 24-n) auf den Wert des Sequenzzählers (14) zu setzen.

4. Vorrichtung (10) nach einem der vorhergehenden Ansprüche,
dadurch**gekennzeichnet**, dass
das vorbestimmte Alter ein Bruchteil der Speicherplätze des Speichers (12) ist und/oder dass zumindest 10%, bevorzugt zumindest 30% oder 50% oder 75% der Elemente einen Alterswert aufweisen, welches größer oder gleich dem vorbestimmten Alter ist.

5. Vorrichtung (10) nach einem der vorhergehenden Ansprüche,
dadurch**gekennzeichnet**, dass
die Vorrichtung (10) weiter ausgebildet ist, den Sequenzzahlwert (24-1 - 24-n) des neuen Elements (16-1 - 16-n) auf den Wert des Sequenzzählers (14) zu setzen.

6. Vorrichtung (10) nach einem der vorhergehenden Ansprüche,
dadurch**gekennzeichnet**, dass
die Vorrichtung (10) ausgebildet ist, das in dem Speicher (12) vorhandene Element (16-1 - 16-n), dessen Sequenzzahlwert (24-1 - 24-n) mit dem Sequenzzähler (14) verglichen wird, zufällig und/oder mittels linear probing und/oder mittels cuckoo hashing aus den in dem Speicher (12) vorhandenen Elementen (16-1 - 16-n) auszuwählen.

7. Vorrichtung (10) nach einem der vorhergehenden Ansprüche,
dadurch**gekennzeichnet**, dass
die Vorrichtung (10) ausgebildet ist, eine Vielzahl von Schreib- und/oder Lesezugriffsanfragen auf den Speicher (12) parallel durchzuführen.

8. Vorrichtung (10) nach einem der vorhergehenden Ansprüche,
dadurch**gekennzeichnet**, dass
die Vorrichtung (10) weiter ausgebildet ist, die in dem Speicher (12) vorhandenen Elemente (16-1 - 16-n) nach ihrem Sequenzzahlwert (24-1 - 24-n) zu sortieren.

9. Verfahren (100) zum Verwalten eines Speichers (12), wobei der Speicher (12) eine Mehrzahl von Speicherplätzen aufweist, wobei der Speicher (12) ausgebildet ist, in jedem der Mehrzahl von Speicherplätzen ein Element (16-1 - 16-n) mit einem dazugehörigen Alterswert zu speichern, wobei
- eine Schreibzugriffsanfrage empfangen wird, um ein neues Element (16-1 - 16-n) in den Speicher (12) zu schreiben,
- der Alterswert eines in dem Speicher (12) vorhandenen Elements (16-1 - 16-n) mit einem vorbestimmten Alter verglichen wird und,
wenn der Alterswert des in dem Speicher (12) vorhandenen Elements (16-1 - 16-n) größer oder gleich dem vorbestimmten Alter ist, das vorhandene Element (16-1 - 16-n) mit dem neuen Element (16-1 - 16-n) überschrieben wird,
**dadurch gekennzeichnet, dass**
ein Sequenzzähler (14) vorgesehen ist, wobei in jedem der Mehrzahl von Speicherplätzen ein Element (16-1 - 16-n) mit einem dazugehörigen Sequenzzahlwert (24-1 - 24-n) gespeichert wird, wobei der Alterswert eines Elements (16-1 - 16-n) durch Subtraktion des Sequenzzahlwerts (24-1 - 24-n) von dem Wert des Sequenzzählers (14) ermittelt wird,
wobei der Sequenzzähler (14) in Erwiderung auf die Schreibzugriffsanfrage und eine Lesezugriffsanfrage erhöht wird.

10. Computerprogrammprodukt, umfassend ein nicht flüchtiges computerlesbares Medium, auf dem Programmcodeteile gespeichert sind, wobei die Programmcodeteile konfiguriert sind, bei Ausführung auf einem Computer das Verfahren gemäß Anspruch 9 auszuführen.

## Claims

1. An apparatus (10) for managing a memory (12), wherein the memory (12) has a plurality of memory spaces, wherein the memory (12) is configured to store an element (16-1 - 16-n) with an associated age value in each of the plurality of memory spaces, wherein the apparatus (10) is configured
- to receive a write access request in order to write a new element (16-1 - 16-n) to the memory (12),
- to compare the age value of an element (16-1 - 16-n) present in the memory (12) with a predetermined age and,
- if the age value of the element (16-1 - 16-n) present in the memory (12) is greater than or equal to the predetermined age, to overwrite the present element (16-1 - 16-n) with the new element (16-1 - 16-n),
**characterized in that**
the apparatus (10) has a sequence counter (14), with the memory (12) being configured to store an element (16-1 - 16-n) with an associated sequence number value (24-1 - 24-n) in each of the plurality of memory spaces, with the apparatus (10) being configured to determine the age value of an element (16-1 - 16-n) by subtracting the sequence number value (24-1 - 24-n) from the value of the sequence counter (14),
wherein the apparatus (10) is further configured to increase the sequence counter (14) in response to the write access request and a read access request.

2. An apparatus (10) according to the preceding claim 1,
**characterized in that**
the elements (16-1 - 16-n) and/or sequence number values (24-1 - 24-n) stored in the memory spaces are stored in the same data structure.

3. An apparatus (10) according to claim 2,
**characterized in that**
the apparatus (10) is configured to set the sequence number value (24-1 - 24-n) to the value of the sequence counter (14) for the element (16-1 - 16-n) affected by the write access request and/or by the read access request.

4. An apparatus (10) according to any one of the preceding claims,
**characterized in that**
the predetermined age is a fraction of the memory spaces of the memory (12) and/or **in that** at least 10%, preferably at least 30% or 50% or 75%, of the elements have an age value which is greater than or equal to the predetermined age.

5. An apparatus (10) according to any one of the preceding claims,
**characterized in that**
the apparatus (10) is further configured to set the sequence number value (24-1 - 24-n) of the new element (16-1 - 16-n) to the value of the sequence counter (14).

6. An apparatus (10) according to any one of the preceding claims,
**characterized in that**
the apparatus (10) is configured to select the element (16-1 - 16-n) present in the memory (12), the sequence number value (24-1 - 24-n) of said element (16-1 - 16-n) being compared with the sequence counter (14), randomly and/or by means of linear probing and/or by means of cuckoo hashing from the elements (16-1 - 16-n) present in the memory (12).

7. An apparatus (10) according to any one of the preceding claims,
**characterized in that**
the apparatus (10) is configured to perform a plurality of write and/or read access requests to the memory (12) in parallel.

8. An apparatus (10) according to any one of the preceding claims,
**characterized in that**
the apparatus (10) is further configured to sort the elements (16-1 - 16-n) present in the memory (12) according to their sequence number value (24-1 - 24-n).

9. A method (100) for managing a memory (12), wherein the memory (12) has a plurality of memory spaces, wherein the memory (12) is configured to store an element (16-1 - 16-n) with an associated age value in each of the plurality of memory spaces, wherein
- a write access request is received to write a new element (16-1 - 16-n) to the memory (12),
- the age value of an element (16-1 - 16-n) present in the memory (12) is compared with a predetermined age and,
if the age value of the element (16-1 - 16-n) present in the memory (12) is greater than or equal to the predetermined age, the present element (16-1 - 16-n) is overwritten with the new element (16-1 - 16-n),
**characterized in that**
a sequence counter (14) is provided, with an element (16-1 - 16-n) with an associated sequence number value (24-1 - 24-n) being stored in each of the plurality of memory spaces, with the age value of an element (16-1 - 16-n) being determined by subtracting the sequence number value (24-1 - 24-n) from the value of the sequence counter (14),
wherein the sequence counter (14) is increased in response to the write access request and a read access request.

10. A computer program product comprising a non-volatile computer readable medium on which program code portions are stored, wherein the program code portions are configured, on the execution on a computer, to perform the method in accordance with claim 9.

## Revendications

1. Dispositif (10) de gestion d'une mémoire (12), la mémoire (12) comprenant une pluralité d'emplacements de mémoire, la mémoire (12) étant conçue pour stocker dans chacun de la pluralité d'emplacements de mémoire un élément (16-1 - 16-n) avec une valeur d'âge associée, le dispositif (10) étant conçu pour
- recevoir une demande d'accès en écriture afin d'écrire un nouvel élément (16-1 - 16-n) dans la mémoire (12),
- comparer la valeur d'âge d'un élément (16-1 - 16-n) existant dans la mémoire (12) à un âge prédéfini, et
- si la valeur d'âge de l'élément (16-1 - 16-n) existant dans la mémoire (12) est supérieure ou égale à l'âge prédéfini, écraser l'élément existant (16-1 - 16-n) par le nouvel élément (16-1 - 16-n),
**caractérisé en ce que**
le dispositif (10) comprend un compteur de séquences (14), la mémoire (12) étant conçue pour stocker dans chacun de la pluralité d'emplacements de mémoire un élément (16-1 - 16-n) avec une valeur de numéro de séquence associée (24-1 - 24-n), le dispositif (10) étant conçu pour déterminer la valeur d'âge d'un élément (16-1 - 16-n) en soustrayant la valeur de numéro de séquence (24-1 - 24-n) de la valeur du compteur de séquences (14),
le dispositif (10) étant en outre conçu pour incrémenter le compteur de séquences (14) en réponse à la demande d'accès en écriture et à une demande d'accès en lecture.

2. Dispositif (10) selon la revendication précédente 1,
**caractérisé en ce que**
les éléments (16-1 - 16-n) et/ou les valeurs de numéro de séquence (24-1 - 24-n) stockés dans les emplacements de mémoire sont stockés dans la même structure de données.

3. Dispositif (10) selon la revendication 2,
**caractérisé en ce que**
le dispositif (10) est conçu pour fixer, pour l'élément (16-1 - 16-n) concerné par la demande d'accès en écriture et/ou par la demande d'accès en lecture, la valeur de numéro de séquence (24-1 - 24-n) à la valeur du compteur de séquences (14).

4. Dispositif (10) selon l'une des revendications précédentes,
**caractérisé en ce que**
l'âge prédéfini est une fraction des emplacements de mémoire de la mémoire (12) et/ou **en ce qu'**au moins 10 %, de préférence au moins 30 % ou 50 % ou 75 % des éléments ont une valeur d'âge supérieure ou égale à l'âge prédéfini.

5. Dispositif (10) selon l'une des revendications précédentes,
**caractérisé en ce que**
le dispositif (10) est en outre conçu pour fixer la valeur de numéro de séquence (24-1 - 24-n) du nouvel élément (16-1 - 16-n) à la valeur du compteur de séquences (14).

6. Dispositif (10) selon l'une des revendications précédentes,
**caractérisé en ce que**
le dispositif (10) est conçu pour sélectionner, parmi les éléments (16-1 - 16-n) existants dans la mémoire (12), l'élément (16-1 - 16-n) existant dans la mémoire (12), dont la valeur de numéro de séquence (24-1 - 24-n) est comparée au compteur de séquences (14), aléatoirement et/ou par échantillonnage linéaire et/ou par hachage de coucou (cuckoo hashing).

7. Dispositif (10) selon l'une des revendications précédentes,
**caractérisé en ce que**
le dispositif (10) est conçu pour effectuer en parallèle une pluralité de demandes d'accès en écriture et/ou en lecture à la mémoire (12).

8. Dispositif (10) selon l'une des revendications précédentes,
**caractérisé en ce que**
le dispositif (10) est en outre conçu pour trier les éléments (16-1 - 16-n) existants dans la mémoire (12) selon leur valeur de numéro de séquence (24-1 - 24-n).

9. Procédé (100) de gestion d'une mémoire (12), la mémoire (12) comprenant une pluralité d'emplacements de mémoire, la mémoire (12) étant conçue pour stocker dans chacun de la pluralité d'emplacements de mémoire un élément (16-1 - 16-n) avec une valeur d'âge associée,
dans lequel
- une demande d'accès en écriture est reçue afin d'écrire un nouvel élément (16-1 - 16-n) dans la mémoire (12),
- la valeur d'âge d'un élément (16-1 - 16-n) existant dans la mémoire (12) est comparée à un âge prédéfini et,
si la valeur d'âge de l'élément (16-1 - 16-n) existant dans la mémoire (12) est supérieure ou égale à l'âge prédéfini, l'élément existant (16-1 - 16-n) est écrasé par le nouvel élément (16-1 - 16-n),
**caractérisé en ce que**
il est prévu un compteur de séquences (14), sachant que
dans chacun de la pluralité d'emplacements de mémoire est stocké un élément (16-1 - 16-n) avec une valeur de numéro de séquence associée (24-1 - 24-n),
la valeur d'âge d'un élément (16-1 - 16-n) est déterminée en soustrayant la valeur de numéro de séquence (24-1 - 24-n) de la valeur du compteur de séquences (14),
le compteur de séquences (14) est incrémenté en réponse à la demande d'accès en écriture et à une demande d'accès en lecture.

10. Produit de programme informatique comprenant un support non volatil lisible par ordinateur sur lequel sont stockées des parties de code de programme, lesdites parties de code de programme étant configurées pour, lorsqu'elles sont exécutées sur un ordinateur, mettre en œuvre le procédé selon la revendication 9.
